Europäisches Patentamt

(19) European Patent Office

Office européen des brevets

(11) Publication number: **0 069 188**
                                   A1

(12) **EUROPEAN PATENT APPLICATION**

(21) Application number: **82100071.8**

(22) Date of filing: **07.01.82**

(51) Int. Cl.³: **A 63 H 33/04**
             **A 63 F 9/08, A 63 F 9/12**

(30) Priority: **26.06.81 JP 99407/81**

(43) Date of publication of application:
**12.01.83 Bulletin 83/2**

(84) Designated Contracting States:
**DE FR GB IT**

(71) Applicant: **SHINSEI CO., LTD.**
**No. 27-23, Sumida, 2-chome**
**Sumida-ku Tokyo(JP)**

(72) Inventor: **Watanabe, Masaru c/o Shinsei Co., Ltd.**
**No. 27-23, Sumida, 2-chome**
**Sumida-ku Tokyo(JP)**

(74) Representative: **Heusler, Wolfgang, Dipl.-Ing. et al,**
**Von Bezold, Dieter, Dr. Schütz, Peter, Dipl.-Ing. Heusler,**
**Wolfgang, Dipl.-Ing. Postfach 86 02 60**
**D-8000 München 86(DE)**

(54) Cubic plaything and its production.

(57) A cubic plaything or toy houses star like multi-faced bodies in its hollow interior, and each of the multi-faced bodies transforms from a hollow cube to the multi-faced bodies and the latter changes into the former. The present toy comprises 8 unit blocks, and each of them is a true hexagon in which 6 triangles to be divided with diagonal lines, seen from the front side, repeat adjacent concaves and convexs, and in which 3 squares are made adjacent at a center of the diagonal line, seen from the rear side. Each of the blocks is made hollow of synthetic resin, and two lines of the adjacent squares and corresponding lines of the outside triangle are connected with an adhesive tape to provide hinges and changings in colours to each of the unit blocks.

FIG_2

BACKGROUND OF THE INVENTION

The present invention relates to a cubic toy and its
production, and more particularly to a cubic toy housing star
like multi-faced bodies in its cube, each transforming shapes
from this to that as a whole or seperately.

BRIEF DESCRIPTION OF THE PRIOR ART

The cube is the fundamental forms of various kinds of
materials existing on the earth, and makes the observers feel
easy and calm.  For toys making use of cubic bodies, there have
been known a puzzle which is rotatably provided with a unit cubic
body of die shape on its core such that 9 front faces are always
exposed outwardly; 8 unit cubes are respectively combined with
other cubes at only 2 edge lines of 12 edge lines, not adjacent
but crossing, in order to make an assembled cubic body of large
size, said 8 unit cubes being painted in white or black or other
colours on 3 outside faces and 3 inside faces.

However, since this kind of existing cubic plaything or toys
only turn inside out the assembled cubic body to make the large
cubic body of different colours, they are simple and lack in
amusing.  Further, since one sheet of an adhesive tape bridges
the unit cubes, or a tongue like film is integrally form with the
unit cube to have the bridging portion, this portion is soon broken by repeating bendings.  Besides the outer appearance of the
toy is spoiled due to gaps made by thickness of the tongue film.

## OBJECT OF THE INVENTION

This invention is to remove such defects involved in the prior art. A first object of the invention is to provide a cubic plaything or toy which is not only to change the body into a large cubic body having different colours by inverting operation but also to divide the large cube into two sections in order to make two star like multi-faced body appear, and by turning over the star like multi-faced body, it turns out two large cubic bodies having hollows of the star like faces. The large cubic body is light in weight, and connecting portions unit bodies comprising the cubic body are so desired in durability that those creat no space during changing the shapes of the body or in the final shape, or the shape is not got out owing to counterforce.

The other object of the invention is to provide a method which produces the cubic plaything relating to said first object industrially, easily and economically.

## SUMMARY OF THE INVENTION

For attaining the above mentioned objects, the invention has such a structure which has a continuously formed front portion of hexagon and repeats concaves and conves adjoining 6 triangular faces to be divided with diagonal lines, and connects at its rear side 8 multi-faced unit bodies made of synthetic resin adjoining 3 square at a center of the diagonal line by bridging thin adhesive tape between two edge lines of the adjacent square faces and between two faces of the corresponding adjacient triangular faces, and which makes hollow the interior of each of the multi-faced unit bodies and provides a shilding cover on an opening formed in at least one square face.

For producing the cubic toy, heat plastic synthetic resin is poured and solidified in metal moulds having cavities of special shape and a male mould to turn out the multi-faced unit body and a shilding cover, and the cover is attached to the body while adhering pieces of desired colours and shapes to the square faces including triangular faces and the cover, and the adhesive tape is bridged by half to the square of the two edge lines of the adjacient multi-faced unit body and the corresponding triangular face.

Not only the cubic toy of the present invention as having mentioned above transforms into the large sized cube of different colours by inverting operation, but this large cube is divided into two large cubes of the same size, and these two cubes transform into the star like multi-faced bodies, and further these star bodies are housed into the hollow interior of said cubic body. The entire body is light in weight, easy in handling and durable in bending at the connecting portions without making spaces between the multi-faced unit bodies nor getting out of the shape due to springback at each of the transformations.

According to a producing method of the invention, the cubic plaything having the above mentioned features may be mass-produced economically through simple facility and processes.

The other embodiment of the invention includes a kit which comprises the independent multi-faced unit group, the coloured pieces of necessary number of sheets and the adhesive tape and with which the user can make the cube with the desired colours and arrangements.

BRIEF DESCRIPTION OF THE DRAWINGS

Fig. 1 is a perspective view showing one example of the cubic toy according to the invention,

Fig. 2 is perspective views of two star like multi-faced bodies obtained by changing the condition of Fig. 1, in which one of them is not applied with the coloured pieces nor the adhesive tape,

Fig. 3 is a plan view of the multi-faced unit body,

Fig. 4 is a bottom view of the above,

Fig. 5 is a right side view of the same,

Fig. 6 is a cross sectional view along VI-VI line in Fig. 5,

Fig. 7 is a rear side view of the same,

Fig. 8 is a plan view, partially in section, showing connections of the multi-faced unit group,

Fig. 9 is a bottom view of the same,

Fig.10 is a side view of the same,

Fig.11 is an enlarged cross sectional view along XI-XI line in Fig. 8,

Fig.12 is a cross sectional view along XII-XII line in Fig. 8,

Fig.13 is a cross sectional view showing stepwise moulding of the multi-faced unit body in the producing method of the cubic plaything according to the invention,

Fig.14 and Fig.15 are perspective views showing one example of the metal mould to be used in the embodiment,

Fig.16 and Fig.17 are cross sectional views showing the

moulding processes,

Fig.18-a, 18-b and 18-c are perspective views of parts to be used in the setting-up process,

Fig.19 is a cross sectional view showing connection of the multi-faced unit bodies,

Fig.20 to Fig.26 are perspective views showing using ways of the plaything according to the invention.


DETAILED DESCRIPTION OF THE INVENTION

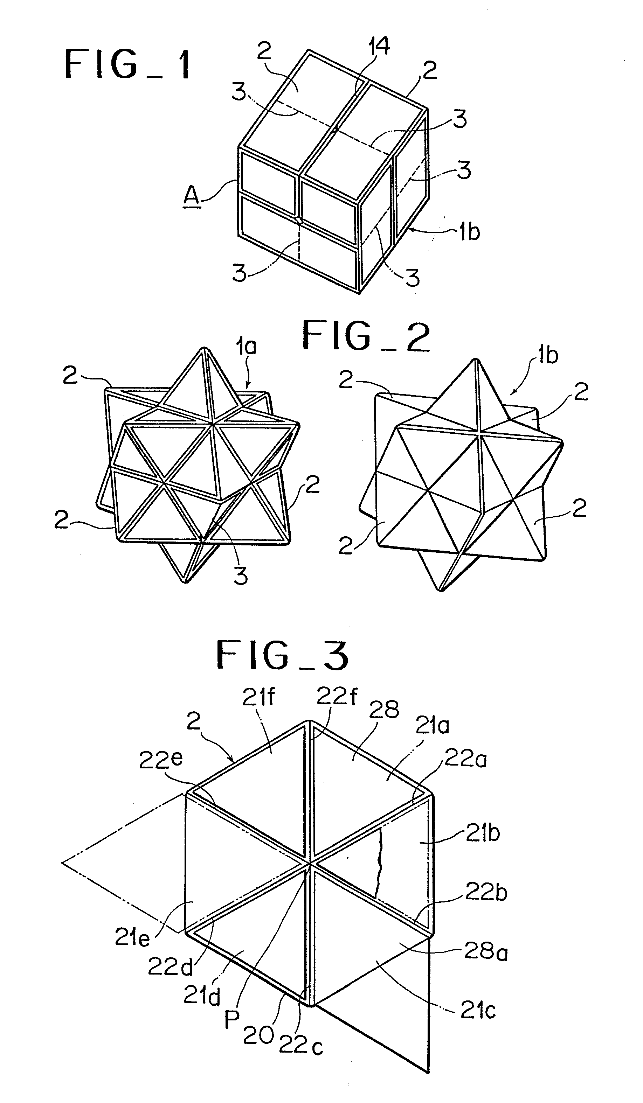

Figs.1 and 2 show one example of the cubic toy according to the invention, and Fig. 1 shows a condition before the transformation, and Fig. 2 shows the condition after  the transformation.  The present toy is fittable in the male and female states and comprises transformable bodies 1a, 1b between the star like multi-faced body and the cubic body.  The bodies 1a, 1b are com-

posed by connecting 8 multi-faced unit blocks 2 of the synthetic resin with connections 3.

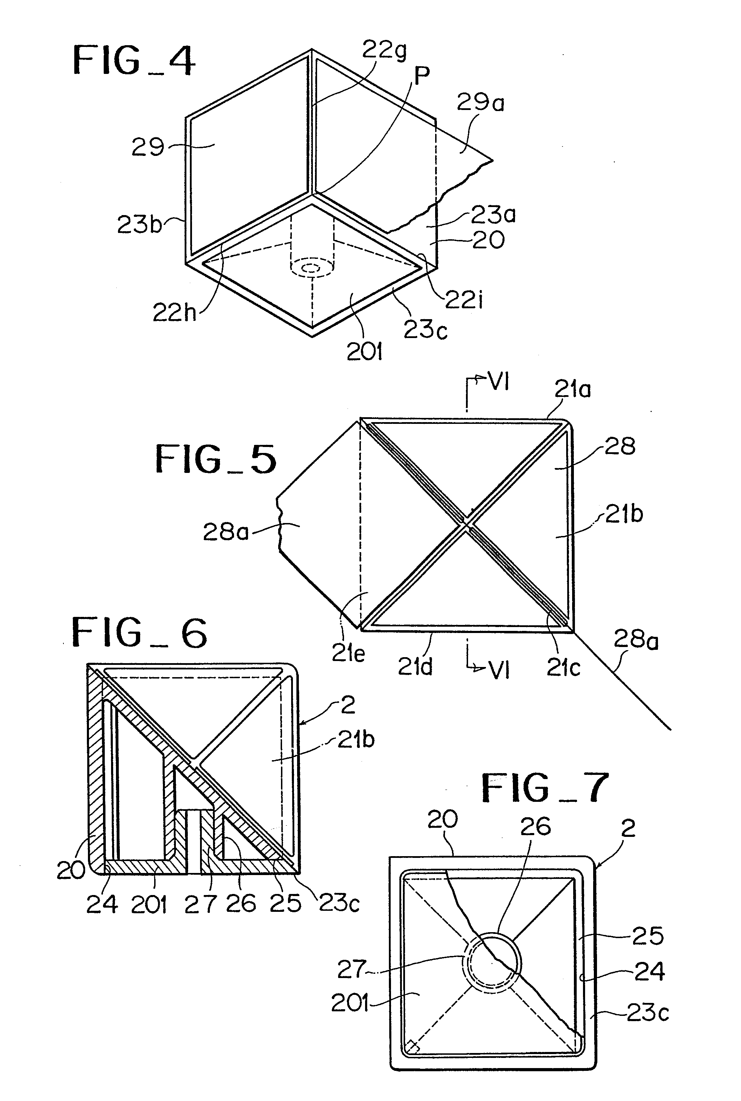

Figs.3 to 7 show an embodiment of said unit block 2 which is of a true hexagon in a front configuration and of a square in the configurations seen from the other sides.  The front face is, as shown in Figs.3 and 5, formed with 2 isosceles triangular faces 21a, 21b, 21c, 21d, 21e, 21f with diagonal lines, and each of the triangular faces is connected by ridgelines 22a, 22b, 22c, 22d, 22e, 22f to repeat the concave and convex alternately.  Its rear face is, as shown in Figs.4 to 6, connected with 3 square faces 23a, 23b, 23c via ridgelines 22g, 22h, 22i seperating 120° from a central point P (assembling point of short edge lines
of the triangles) of the rear side of said diagonal lines.

Each of the multi-faced unit blocks 2 has an opening 24
of at least one square 23a as shown in Figs.6 and 7, and comprises a main body 20 of a hollow interior and a shielding
cover 201 for the opening 24. The main body 20 is hollow with
leaving walls to make the triangular faces 21a to 21f, and the
square faces 23a to 23c. The opening 24 is formed on its edge
with a step 25 for engagement owing to depth corresponding to
thickness of the shielding cover, and the cover 201 of the synthetic resin closes the hollow part and obtains the square 23c there-
by. This cover 201 may be attached to the opening 24, but for
simplifying the process a boss 26 is integrally formed in the
hollow part in this embodiment and a pin 27 is projected on a
bottom of the cover 201 so that the pin 27 is mounted on the boss
26 to fix the cover 201 to the body 20 and make the multi-faced
unit block 2.

The triangular faces 21a to 21f are applied with pieces
of optional shapes and colours, and the same arrangement is applied to the square faces 23a to 23c. The coloured pieces 28, 29
are made of thin plastic film or film type composite paper such
as polyester film, polyethylene film or the like, which is coated on its rear side with pressure sensible adhesive substance.
In the present embodiment, the coloured pieces 28, 29 have
shapes corresponding to the faces to be adhered with the pieces.
The pieces 28 to the triangular faces are mono-colours of three
kinds, and the pieces 29 to the square faces are mono-colours
of two kinds such that different colours are effected when the

two bodies 1a, 1b are changed into the large square. The colours are not of course limited to this embodiment, and the patterns of light blue spots are also available.

The multi-faced body 2 may be formed with a shallow concave on the faces to be attached, but the colour pieces 28, 29 are thick in micron order and the attaching concave is not necessary. The inventor tried, instead of adhesion, to colour the multi-faced unit per se, but this way was not desirable because of complication in the production process and increase of the production cost.

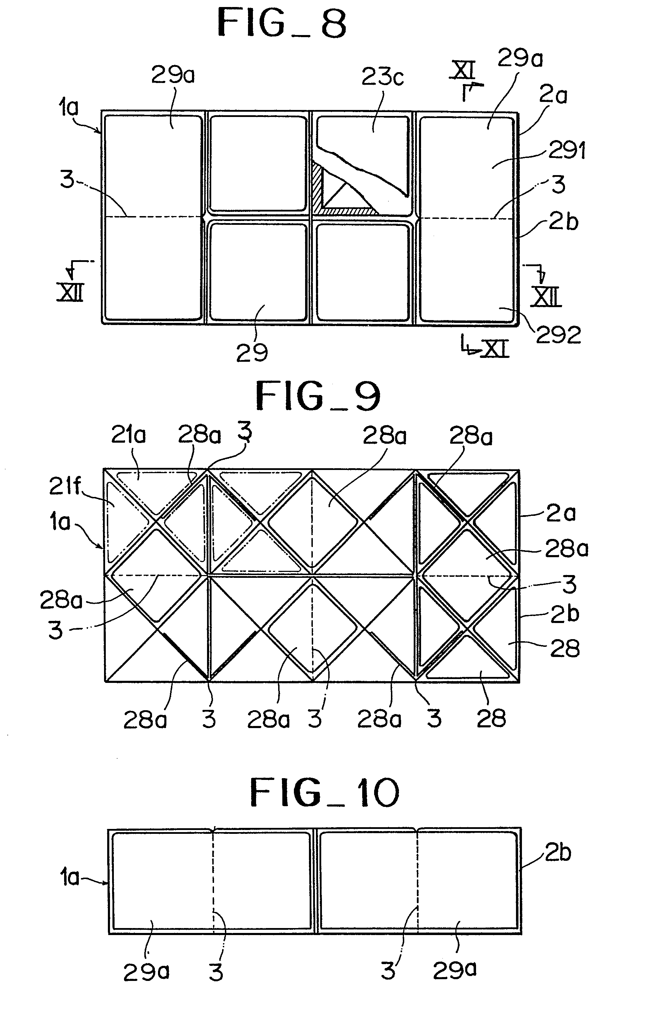

Figs.8 to 12 show one of the toy 1a connecting each of the multi-faced units 2 and the detail of the connecting portion 3. In this regard, the other toy 1b is of the same structure. Each of the multi-faced unit blocks 2 is connected in succession at two square faces not adjacent but crossing, to the other multi-faced unit block 2 in order to make endless ring having eight connections (hinge portions).

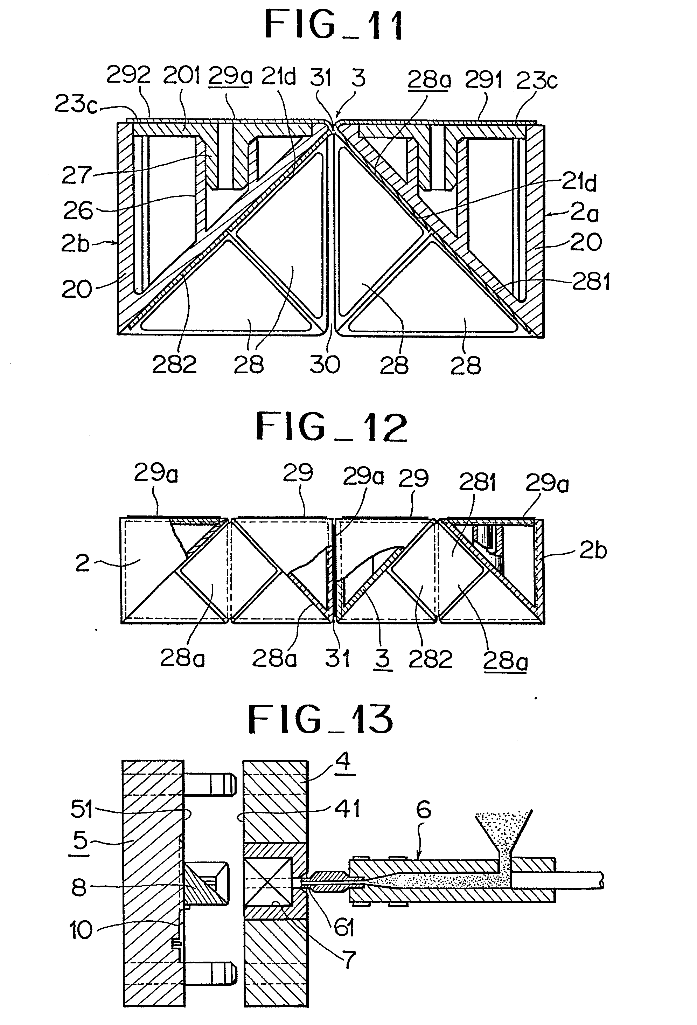

With respect to the structure of these connections, there are, as shown in Figs.8 and 11, arranged the multi-faced unit block 2a and the adjacent one 2b with a fine space 30 (e.g. around 0.5mm). One of the squares 23c of the block 2a is attached with half part 291 of a rectangular tape 29 comprising a thin plastic film or film type composite paper coated with pressure sensible substance on its rear side, and the remaining half part 292 is bridged on the other one 23c of the block 2b.

Further, the half 281 of the rectangular adhesive tape 28a of the same property and thickness as said above is also applied to one triangular face 21d of the triangular faces 21d, 21d which are opposite each other at the surface position corresponding to said tape 29a, while the remaining half 282 is bridged on the other triangular face 21d, and the adhesive tapes 28a, 29a of the outside and the inside are superimposed within a range corresponding to the space 30, thereby to provide one entire and strong connection 31. The adhesive tapes 28a, 29a also serves to colour the toys la, lb. Therefore, it is convenient to use the tape 29a of the same colour as that of the colour piece 29 of the toys la, lb, and it is neat to select three kinds of coloured tape 28a for bridging the triangular faces. Other seven connecting portions are the same as mentioned above, and detailed explanation is omitted.

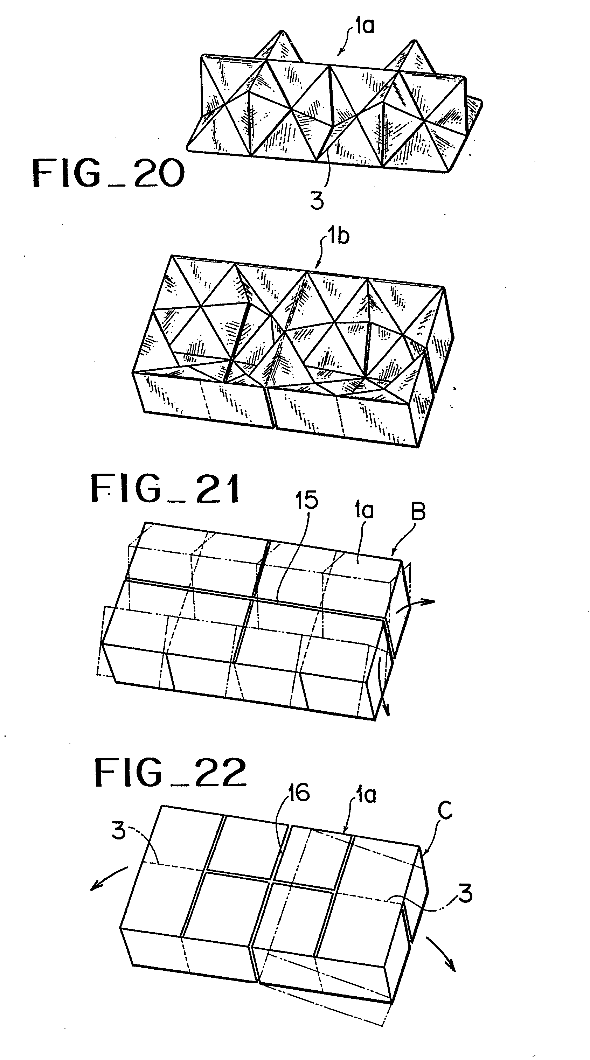

An explanation will be made to using conditions of the cubic plaything of the invention in reference to Figs20 to 26. As in Fig.20, one body la is formed to project halves of the star multiface, and on the other hand the other body lb is formed to make star like concaves (Fig.25), and when the two blocks la, lb of these conditions are inverted via the center connection, the large sized cubic body A is made as shown in Fig. 1, and the block la is housed in the large body A.

When developing to the right and the left, the block transform into a rectangular prism B showing a square face 12 of the block la as shown in Fig.21. Subsequently when developing to the right and the left via a dividing line 15 running center from the condition in Fig.21, it changes into a rectangular prism C showing a square face 20 as shown in Fig.22. Further when inverting from this condition along a seperating line 16 crossing with said dividing line 15, it turns out a large cube D where 24 faces are of the colour of the toy block la.

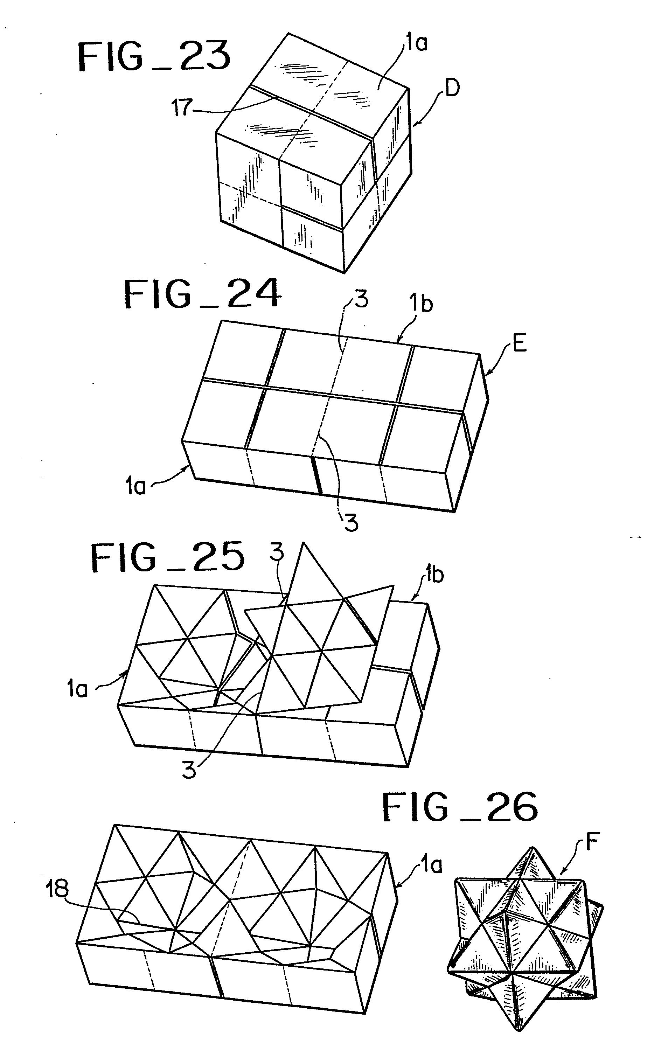

When again developing along the central line 17, it becomes a rectangular prism E showing 12 square faces of the colour of the toy block 1b as shown in Fig.24. As keeping this condition the toy block 1b is pulled up via the right and left connections 3, 3 as shown in Fig.25, and the square faces of the pulled up edge faces are met and drawn out from the toy block 1a, then there remain an independent star like multi-faced block F and the toy block 1a of the star like multi-faced concave which has housed the block F as shown in Fig.26. When this block 1a is inverted along the dividing line 18 in length direction and it is again inverted along the connecting line crossing with said dividing line, it also becomes the star multi-faced block and transforms into the two star multi-blocks. These star multi-faced blocks F, F become the large cube of different colours by three inversions in the way reverse to said above.

In the above mentioned using conditions, since the multi-faced unit group composing the toy bodies 1a, 1b are made hollow interior, the weight is very light.

A reference will be made to a producing method of the cubic toy.

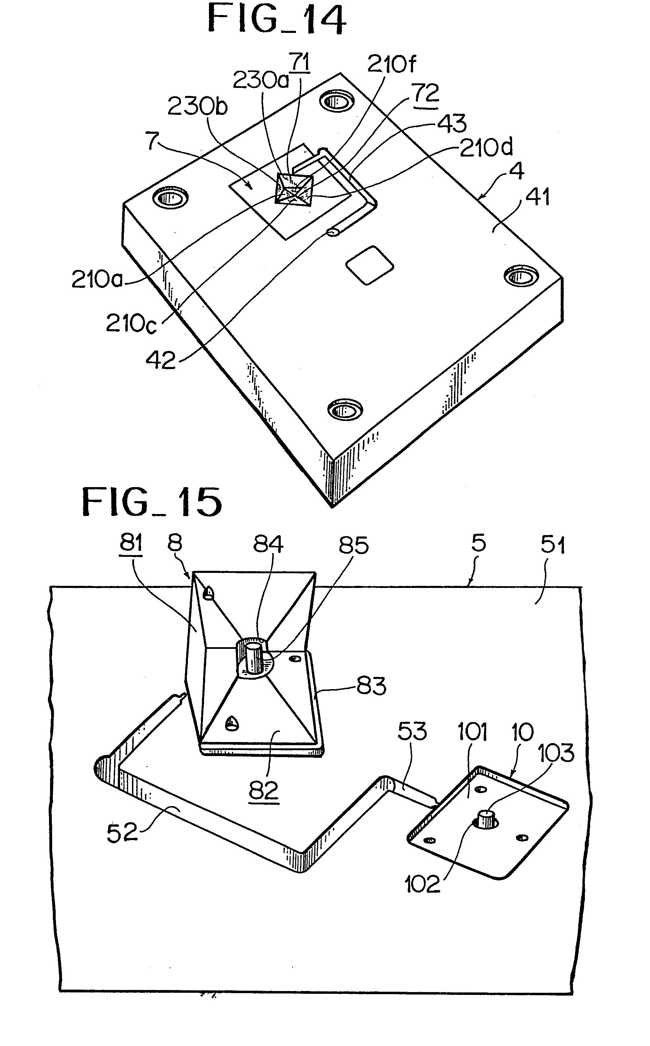

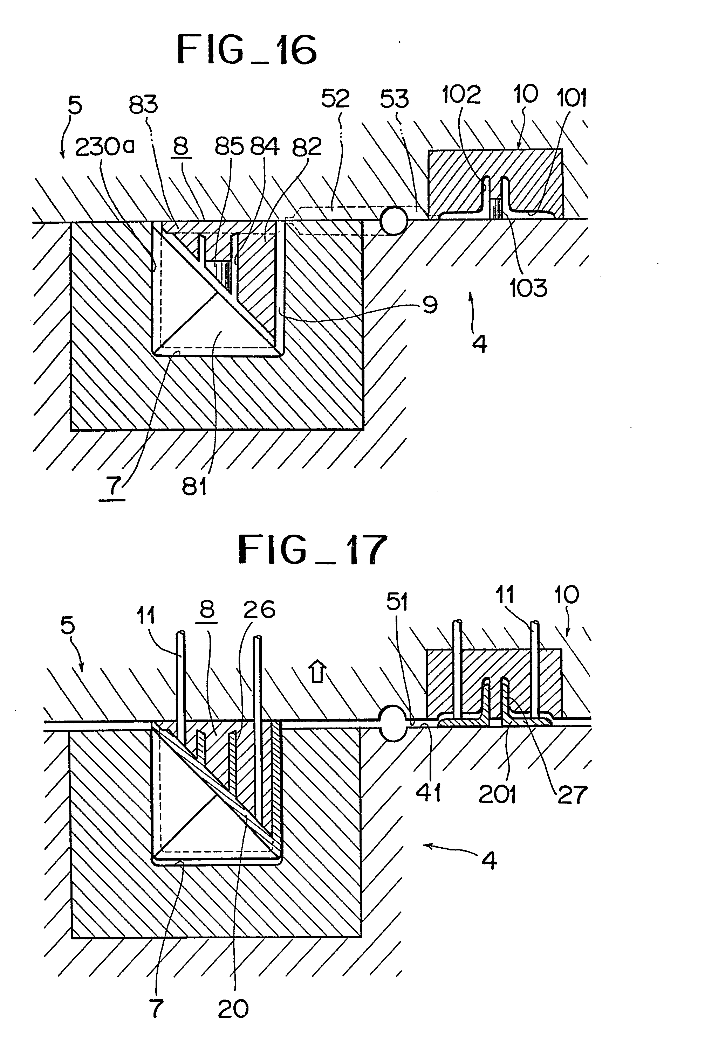

Figs.13 to 19 show one example of the producing method. At the beginning stage, the main body 20 of the multi-faced unit and the shielding cover 201 are respectively shaped of the heat plastic synthetic resin with a former 6 such as a jetting forming machine having two metal moulds 4, 5 as shown in Fig.13. The mould 4 is carved with a cavity 7 downwardly from a separating surface 41 as shown in Fig.14, and the mould 5 has a male mould 8 projecting from a separating surface 51 as shown in Fig.15.

The cavity 7 is defined with a deep hole 71 and a shallow hole 72, the deep hole being in plain of triangular pillar shape where two triangular moulds 210a, 210f are raised in obliquity, and the shallow hole being formed in obliquity from an opening with two triangular mould 210c, 210d which meet said two triangular moulds 210a, 210f at ridgeline in order to form a square in plain with said deep hole 71. A vertical face combining the moulding faces 210c, 210d of the shallow hole and the moulding faces 210a, 210f of the deep hole, is defined with two triangular faces. The remaining vertical face of the deep hole 71 is defined with square moulding faces 230a, 230b. The separating surface 41 is formed with a flow channel 42 communicating with a nozzle 61 of the former 6 and a hot path 43 communicating at its one end with the flow channel and connecting at the other end to the cavity 7 via a gate.

A male mould 8 of the other metal mould 5 is prepared in reducing size to have a clearance 9 for forming walls desired between the moulding faces of the deep hole 71 and the shallow hole 72. The male mould 8 is composed by vertically and integrally stepping a projection 81 of triangular pillar for the deep hole 71 and a projection 82 of triangular pillar for the shallow hole 72, and these vertical projections 81 and 82 are in plain square. The lower projection 8 is formed at its base with a projecting edge 83 for forming a step holding the shielding cover, having desired width. A center of the square is provided with a cutout 84 half of which is positioned in the deep hole and another half of which is positioned in the shallow hole and a pin like projection 85 standing from the base of the cutout 84 coaxially with the base.

A shilding cover forming cavity 10 is positioned at a place with proper distance from the metal mould 8 of the metal mould 5. This cavity 10 coincides with an outer shape of the male mould and has a bed concave 101 smaller a bit than said outer shape and a pin like hole 102 further going inwardly than the bed concave 101. The present embodiment stands a thin pin 103 from the bottom of the pin hole 102 in order to form an air hole. The separating surface 51 of the metal mould 5 is formed with a hot path 52 meeting the hot path 43 of the metal mould 4. The hot path 52 is prepared with a branch 53 reaching the cavity 10, whereby the main body 20 and the cover 201 are produced in once process.

The shown moulds 4, 5 are for producing one block, and those for a plurality of blocks are of course available, and the cavity 10 may be formed separately.

For production, the metal moulds 4, 5 are tightened into which the former 6 jets the molten plastic synthetic resin, e.g. polyethylene such as ABS synthetic resin from the nozzle 61, and the molten plastic synthetic resin is poured into the wall forming clearance composed between the cavity 7 and the male mould 8 via the hot path 43 and solidified there. By the synthetic resin adjoining the moulding surfaces of the cavity 7, six triangular faces repeating alternately the concave and the convex and three adjoining square faces at the center of the diagonal lines are formed. By the synthetic resin adjoining the vertical steps 81, 82 of the male mould 8, the inner walls, the opening and the boss are formed which correspond in shape to said triangular faces and the square faces to turn out the main body 20. A cover piece 201 with a pin is formed with the separating surface 41 of the metal mould 4 and the cavity 10.

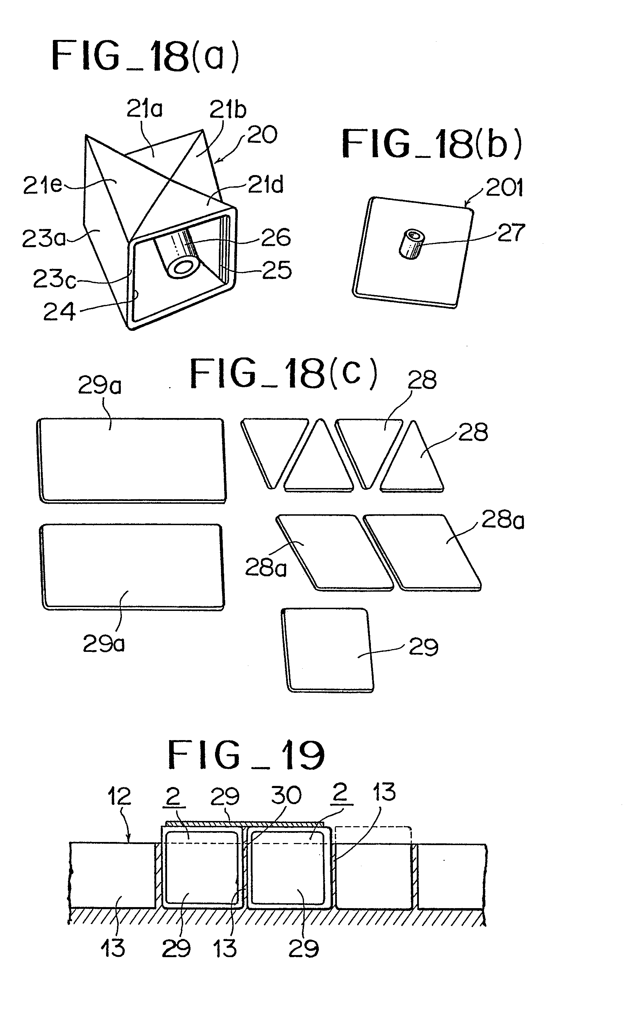

Therefore, the metal moulds 4, 5 are opened after solidification of the synthetic resin, and if an ejector pin 11 provided on the metal mould 5 is projected, the multi-faced unit
block 20 and the shielding cover 201 are obtained as shown in
Fig.18-a and Fig.18-b, and being formed with the metal moulds,
the blocks may be formed efficiently with the easiest separating
lines, though the products are very complicated.

The shielding cover 201 is applied to the opening 24 of
the main body 20 of the multi-faced unit block, and this operation may be easily carried out with the pin 27 and the boss 26.
The desired coloured pieces 28, 29 and the adhesive tapes 28a,
29b are stamped out, and the coloured pieces 28 are adhered to
the triangular faces of the multi-faced unit blocks 2 previously
obtained in the desired arrangement, and the coloured pieces 29
are applied to the square faces in the same manner.  The attaching face of the shielding piece 201 is covered thereby to make
the outer appearance neat and to prevent slipping out of the
shielding piece 201.

The triangular faces and the square faces are not applied
with the adhesive tapes 28a, 29b at all, otherwise the adhesive
tape 28a or 29b is applied by half to the multi-faced unit block.
A thin spacer is made intervene between the multi-faced unit
blocks 2, 2 to be connected, and a tool 12 having square hole
group formed with projecting walls 13, 13 at each of boundaries
as shown in Fig.19 is used, and on this tool eight multi-faced
unit blocks 2, 2 are inserted in two raws.  Since the necessary
space 30 is obtained thereby with the projecting walls 13, 13,
the adhisive tape 29a is bridged between the square faces of the blocks 2, 2 positioned at the place to be connected. The blocks 2, 2 are inverted 90° and the adhesive tape 29a is bridged between the necessary square faces and the opposite side is connected in the same manner. Thus, the six portions are connected and the multi faced unit blocks connected at the three portions are divided at the center to make a cube and insert into the tool, and the remaining square faces are connected with the adhesive tape 29s.

In this manner, the connection of the rear side is formed and then the triangular faces are exposed and inserted into the tool 12 by inversion in the same manner as mentioned above. The adhesive tape 28 is bridged on the triangular faces which face upwardly. Thus the destined cubic plaything is completed as shown in Figs.1 and 2.

WHAT IS CLAIMED IS

1. A cubic plaything characterized in that front part has a hexagonal shape, and 6 triangular faces 21a to 21f to be divided with diagonal lines are connected such that those adjacent repeat concave and convex, and its rear face comprises eight multi-faced unit blocks 2 adjoining three square faces 23a to 23c at boundary of a central point P of diagonal lines, and each of said multi-faced unit blocks 2, 2 is made hollow in interior, and a shielding piece 210 is prepared to an opening 24 provided in at least one square face, and the multi-faced unit group 2 is connected by applying adhesive tape 29a to two lines of adjoining square faces, whereby the cube transforms into star like multi-faced body and *vice versa*.

2. A cubic plaything as claimed in Claim 1, characterized in that a coloured adhesive tape 28 is applied by half 281 to one of triangular faces at position corresponding to the adhesive tape 29a attached to between the square faces of the multi-faced unit group 2, and the remaining half of the tape is applied to the other adjacent triangular face, and connected portion is provided by superimposing the linear coloured adhesive tapes 28a, 29a on the front and rear sides.

3. A cubic plaything as claimed in Claim 1, characterized in that a boss 26 is integrally formed in a hollow part of each of the multi-faced unit blocks 2, and a pin 27 is integrally provided on the shielding piece 201 for mounting on the boss 26, and the opening 24 is provided with a step having depth corresponding to thickness of the shielding piece 201.

4.  A cubic plaything as claimed in Claim 1, characterized in that coloured piece 28 of optional shape is attached to a triangular face other than the triangular face to be connected of each of the multi-faced unit block, and each of square faces including outer faces of the shielding cover 201.

5.  A method of producing a cubic palything, characterized by pouring heat plastic synthetic resin between a metal mould 4 carved with a cavity 7 and a metal mould 5 projecting a male mould 8 to be inserted in said cavity 7, forming multi-faced unit block 20 whose front part has a true hexagon and where adjacent six triangular faces to be divided with diagonal lines alternately repeat concaves and convex, and three square faces of the rear side are adjacent at central point of the diagonal lines, and interior is hollow with leaving walls of triangular faces and square faces and said interior is integrally formed with an opening 24, and forming a shielding piece 201 corresponding to said opening 24, closing the opening to provide the multi-faced unit blocks 2, followed by attaching half part 291 of an adhesive tape 29a to one square face of the multi-faced unit blocks 2 and attaching the remaining half part 292 to one square face of the multi-faced unit blocks 2, and successively carrying out this operation on each of the multi-faced unit blocks 2, 2...thereby to connect eight multi-faced unit blocks in endless ring.

6.  A method as claimed in Claim 5, characterized in that a cavity 7 is defined for one metal mould 4 with a deep hole 71 and a shallow hole 72, the deep hole being in plain of triangular pillar shape where two triangular moulds 210a, 210f are raised in obliquity, and the shallow hole being formed in obliquity from an opening with two triangular moulds 210c, 210d which meet said two triangular moulds 210a, 210f at ridgeline in order to form a square in plain with said deep hole 71, and a male mould 8 of the other metal mould 5 is prepared in reducing size to have a clearance 9 for forming walls desired between the moulding faces of the deep hole 71 and the shallow hole 72.

7. A method as claimed in Claim 6 characterized by having a cutout 84 of pillar shape where a male mould 8 is formed with an upper projection 81 half of which reaches a bottom of the deep hole and a remaining half of which reaches a bottom of the shallow hole, and a pin like projection 85 coaxial with said cutout 84 and forming a boss at the same time as forming the unit block.

8. A method as claimed in Claim 6, characterized by providing a shielding cover forming cavity 10 which is provided with a bed concave 101 having a configuration meeting an outer configuration of the male mould on the metal mould 5, and guiding one part of flowing synthetic resin into the cavity and the male mould, and forming the shielding cover and the pin at the same time forming the unit block.

# FIG_1

2   14   2
3        3
        3
A
        1b
3    3

# FIG_2

2   1a
              2
2
    2
    3

2        1b
    2
2        2
    2

# FIG_3

    21f   22f   28   21a
2                    22a
22e
              21b
              22b
21e           28a
22d
21d           21c
P  20  22c

FIG_4

FIG_5

FIG_6

FIG_7

0069188

# FIG_8

# FIG_9

# FIG_10

# FIG_11

# FIG_12

# FIG_13

# FIG_14

# FIG_15

# FIG_16

# FIG_17

## FIG_18(a)

## FIG_18(b)

## FIG_18(c)

## FIG_19

FIG_20

FIG_21

FIG_22

0069188

**FIG_23**

**FIG_24**

**FIG_25**

**FIG_26**

| Category | Citation of document with indication, where appropriate, of relevant passages | Relevant to claim |
|---|---|---|
| | **DOCUMENTS CONSIDERED TO BE RELEVANT** | |
| Y | FR - A - 1 425 345 (M.L. PARIS) <br> * abstract, points 4, 6, 7 ; page 2, left-hand column, lines 11 to 17 ; page 3, left-hand column, lines 5 to 17 ; fig. 5, 6, 7 * <br> -- | 1-3 |
| Y <br> A | US - A - 2 565 823 (C. POOL) <br> * column 6, lines 3 to 53 ; fig. 6 * <br> -- | 1,3 <br> 5 |
| Y | DE - U - 1 897 364 (P.-M. PFEIFFER) <br> * claims 1, 5, 6 ; page 5, first paragraph ; fig. 2 * <br> -- | 1,2 |
| Y | DE - A - 1 603 668 (K. ZYSSET) <br> * claims 1, 4 * <br> & GB - A - 1 112 694 <br> -- | 3 |
| A | US - A - 3 746 345 (T.P. PALAZZOLO) <br> * column 2, lines 20 to 22, 43 to 45 * <br> -- | 1,5 |
| A | US - A - 3 669 598 (A.S. TUCKER) <br> * claim 1 * <br> ---- | 5 |

**CLASSIFICATION OF THE APPLICATION (Int. Cl. ³)**

A 63 H 33/04
A 63 F 9/08
A 63 F 9/12

**TECHNICAL FIELDS SEARCHED (Int.Cl.³)**

A 63 F 9/00
A 63 H 33/00
B 29 F 1/00
B 29 C 1/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 15-10-1982 | CLOT |